# EUROPÄISCHE PATENTANMELDUNG

(11) **EP 1 642 791 A1**
(43) Veröffentlichungstag der Anmeldung: **05.04.2006**
(21) Anmeldenummer: 05462002.6
(22) Anmeldetag: 19.05.2005
(51) Int. Cl.: B60R 25/06

(54) **Elektromechanisch betriebener, hydraulischer Kupplungneutralisierer- und Verrieglungsmechanismus für den Diebstalschutz von Fahrzeugen**

(30) Priorität: 21.05.2004 HU 0401033
(71) Anmelder: Kvantron Kft., 1147 Budapest (HU)
(72) Erfinder: Béla, Vaczi, 2112 Vereseghaz (HU); Karoly, Tessényi, 1082 Budapest (HU)

(57) **Zusammenfassung**

Die Erfindung ist ein mit Elektromotor betriebenes Treibwerk, das gleichzeitig die Betätigung der Kupplung neutralisiert, den Motorraum verriegelt, die Betätigung des Gangschalthebels unwirksam macht und zusätzlich noch an mehreren Stellen Zündungsverriegelung ausüben kann.

Der Sinn der Erfindung ist ein mit Elektromotor (6) betriebenes Treibwerk (7), das die Drehbewegung des Elektromotors (6) in lineare Bewegung umwandelt, wodurch es einen direkten Anschluss mit den Systemen hat, die den Kolben (96) des Druckentlastungsbehälters (22) bedienen und dadurch die Kupplung neutralisieren sowie den Motorraumöffnerriegel (21) bedienen, der verhindert, dass der Motorraum geöffnet wird, und die die verwendeten Verriegelungsmechanismen (23, 24) betätigen, bei denen das Sicherheitssystem des Fahrzeuges das braucht und Möglichkeit hat vorzubeugen, dass das Fahrzeug gestohlen wird. Die Steuerungselektronik (4) gibt dem Elektromotor einen Befehl über die Bedienung des Schlosses, das das Schutzsystem im Einklang mit dem Signal des Induktivsensors einschaltet (3).

## Beschreibung

Objekt der Erfindung ist ein mit Elektromotor betriebenes Triebwerk, das gleichzeitig die Betätigung der Kupplung neutralisiert, den Motorraum verriegelt, die Betätigung des Gangschalthebels unwirksam macht und zusätzlich noch an zwei bzw. an mehr Stellen Zündungsverriegelung ausüben kann.

Anwendungsbereich der Erfindung sind alle Fahrzeuge, in denen sich die Öffnungsmechanik des Motorraumes im Passagierraum befindet und die Verbindung zwischen dem Motor des Fahrzeugs und den betriebenen Rädern mit einer Kupplung gewährleistet wird, in denen die Gänge mit einem manuellen oder automatischen Gangschalthebel geändert werden und in deren Elektriksysteme elektrische Unterbrechungsvorrichtungen eingebaut werden können, um die Zündung und den Betrieb zu verhindern.

Heutzutage rückt auch im Falle von Fahrzeugdiebstählen die Vorbeugung in den Vordergrund, das heißt der Anspruch steigt in der Richtung, dass man die Fahrzeuge dort wiederfinden möchte, wo sie geparkt wurden. Deshalb weicht die Erfindung von den bisher angewendeten Mechanismen ab.

Das Patent mit der Registernummer HU 213 287 A stellt einen Mechanismus dar, der den Fahrzeugdiebstahl erschwert. Bei der Anwendung der Erfindung aus dem Patent muss das hydraulische Kupplungssystem generell umgestaltet werden, weil der Mechanismus einen, zwischen dem Hauptkupplungszylinder und dem Kupplungszylinder eingebauten Schlusszapfen sowie eine Rückschlagklappe, einen Hydroakkumulator und eine Nachsaugrückschlagsklappe - von der eine Ableitung unmittelbar an den Kupplungsflüssigkeitsbehälter angebunden ist - enthält. Sinn der Erfindung ist, dass sie nach der Abschließung des Schlusszapfens den Kupplungszylinder durch die Rückschlagsklappe mit dem Eindrücken des Hauptkupplungszylinders betätigt, wodurch die Trennung der Kupplungsscheiben erfolgt. Danach, durch das erneute Eindrücken des Hauptkupplungszylinders, fließt das Hydrauliköl unmittelbar in den Hydroakkumulator. Die Erfindung löst das Problem des Fahrzeugdiebstahls, in dem "im getrennten Zustand der Kupplung die Gangschaltung zwar möglich ist, aber die Kupplung ineffektiv bleibt und so kann das Fahrzeug mit seinem eigenen Motor nicht weggefahren werden."

Die Gestaltung des bezogenen Patents ist kompliziert, weil das Kupplungssystem an mehreren Stellen umgebaut werden muss, und dadurch die Wahrscheinlichkeit von Fehlfunktionen größer wird. Außerdem kann das Fahrzeug mit getrennter Kupplung abgeschleppt werden, so wird dem Aspekt nicht genüge getan, dass man das Fahrzeug dort findet, wo es geparkt wurde.

Ziel der Erfindung ist, durch die Beseitigung der Mängel der bekannten Mechanismen eine Mechanik zu erstellen, die leicht herzustellen und zu montieren ist.

Der Sinn der einen Ausführungslösung des Patents ist eine Triebwerkeinheit, die mit einem Elektromotor betrieben wird, und die Drehbewegung des Motors in lineare Bewegung umwandelt, wodurch sie einen direkten Anschluss mit den Systemen hat, die den Motorraumöffner verriegeln und die Kupplung neutralisieren. Die Elektronik, die den Elektromotor bedient, wird vom Akkumulator des Fahrzeugs mit Strom versorgt. An die Steuerungselektronik sind das Prüfsignal der Zündung, ein Hallgenerator, der die Position des Triebwerks angibt und der Induktivsensor angebunden, letzterer nimmt die Aktivierung der Gangschalthebelblockierung wahr. Für die Erhöhung der Sicherheit wurde die Elektronik auch mit Zündungsverriegelungsfunktion versehen.

Bei einer anderen Ausführungsvariante der Erfindung, wenn man im Passagierraum keine Gangschalthebelblockierung anwendet, wird das System für die Verriegelung des Motorraumöffners und die Neutralisierung der Kupplung mit einem Gerät für die Blockierung des Gangschalthebels im Motorraum ergänzt, was in seiner Funktion mit dem Riegel des Motorraumes übereinstimmt. In diesem Fall erfolgt die Steuerung der Elektronik aus dem Passagierraum mit einem Sicherheitsschloss, wozu es einen Schlüssel gibt, wobei dessen offene oder geschlossene Position auch mit dem Induktivsensor kontrolliert werden kann. Anstatt des Sicherheitsschlosses und des Induktivsensors kann als Alternativlösung eine Tastatur mit Zahl- oder Buchstabenkombination angewendet, oder auch ein Diebstahlverhinderungssystem eingebaut werden.
Bei einer dritten Ausführungsvariante, wenn der Kupplungsausheber beim Fahrzeug nicht hydraulisch betrieben wird, wird auch für die Blockierung des Kupplungsausheberarmes dasselbe Gerät wie für die Verriegelung des Motorraumöffners verwendet. In diesem Fall kann die Steuerung nach beiden oben beschriebenen Lösungen geschehen.

Ein Vorteil der Montage des Systems ist es, dass die eingreifenden und exekutiven Teile im Motorraum des Fahrzeuges untergebracht werden: - 4 Steuerungselektronik, 10 Zündungsverriegelung, 6 Elektromotor, 7 Triebwerk, 9 linearer Bewegungsumwandler, 21 (211) Motorraumöffnerriegel, 23 Riegel für den Kupplungsausheber, 24 Riegel des Gangschalthebels, 22 Druckentlastungsbehälter-. Dadurch wird die Sicherheit gegen Diebstähle gesteigert, weil nur 3 der Induktivsensor in den Passagierraum eingebaut wird, der mit einem solchen Sabotagenschutz ausgerichtet ist, der auch auf das Verbindungskabel zwischen dem 3 Induktivsensor und der 4 Steuerungselektronik ausgedehnt ist. So gibt die 4 Steuerungselektronik dem 6 Elektromotor einen Blockierungsbefehl falls irgendein nicht gewollter Eingriff erfolgt.

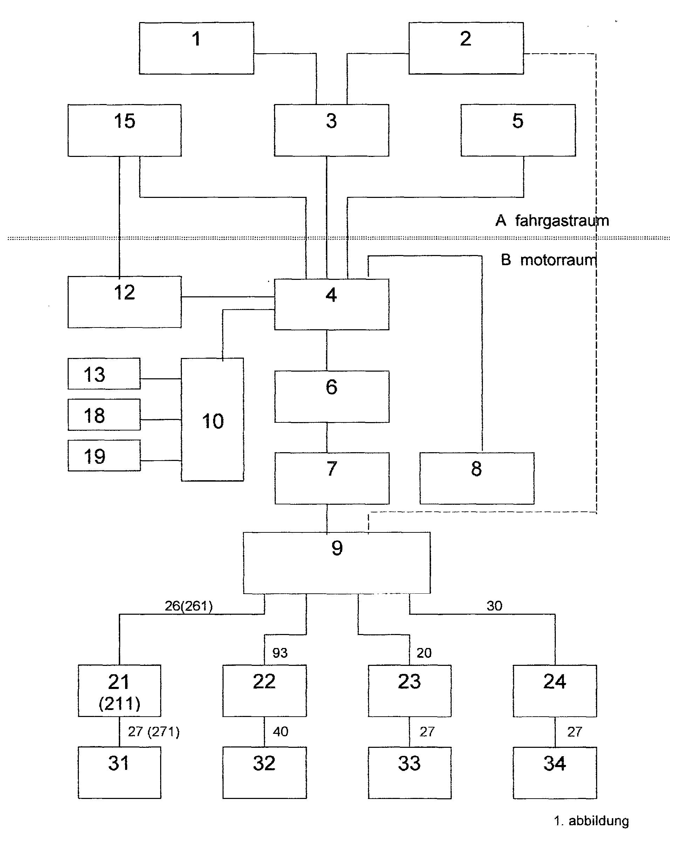

Der Betrieb des Systems kann- wie auf Abbildung 1. vorgestellt - auch ohne elektrische Steuerung verwirklicht werden. Auf diese Weise ist das 2 Sicherheitsschloss mit Schlüssel unmittelbar an den 9 linearen Bewegungsumwandler angebunden, aber in diesem Fall wird auch der elektrische Sabotagenschutz aus dem System entfernt.

Ein weiterer Vorteil des Systems ist, dass die Strukturelemente des Fahrzeuges nicht umgestaltet werden müssen, das Riegelungs- und Neutralisierungssystem kann nur als Zusatzteil anmontiert werden. Die Bestandteile des Systems können auch einzeln angewendet werden, der Ausbau hängt vom benötigten Grad des Sicherheitsniveaus ab.

Ein Vorteil vom Motorraumverriegelungs- und Kupplungsneutralisierungsmechanismus bzw. von der Gangschalthebelblockierungsmechanik ist die große Sicherheit und die einfache Bedienung, - wer das System bedient, greift an einem Punkt ein (Öffnung-Schließung), während das Sicherheitssystem die Benutzung des Fahrzeuges gleichzeitig an mehreren Stellen blockiert. Ein weiterer Vorteil ist, dass das System auch in diejenigen Fahrzeuge nachträglich einmontiert werden kann, bei denen mit der Verriegelung des Steuerungssystems des Gangschalters erreicht wird, dass die Gänge nicht geschaltet werden können - egal ob es sich um Fahrzeuge mit manuellem, automatischem oder sequenziellem Gangschalter handelt.

Die Erfindung wird durch Abbildungen vorgestellt:
Abbildung 1. Blockschema der Erfindung,
Abbildung 2. Betriebsskizze,

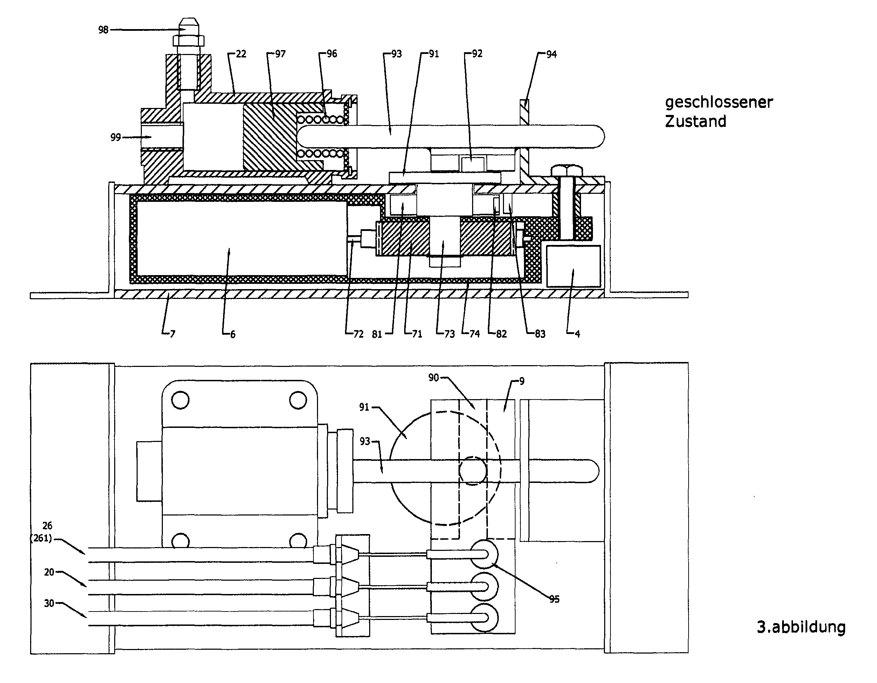

Abbildung 3. elektrisches Triebwerk,

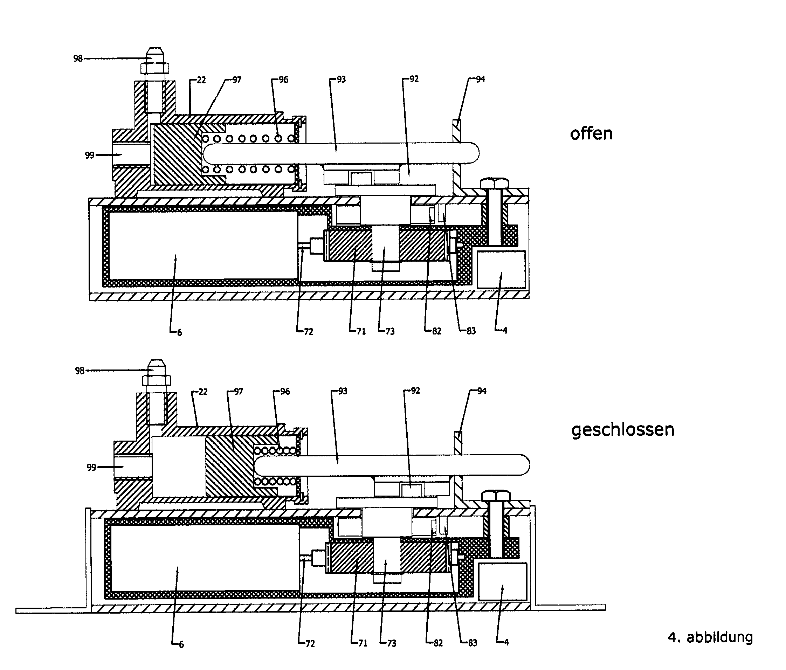

Abbildung 4. Schnitt des elektrischen Triebwerks im offenen und geschlossenen Zustand,
Abbildung 5. Skizze der Abschließung der Motorhaube,
Abbildung 6. die Verriegelung, an das Schloss der Motorhaube gepasst,
Abbildung 7. Verhinderung der Öffnung der Motorhaube durch die Verriegelung des Sicherheitshakens,

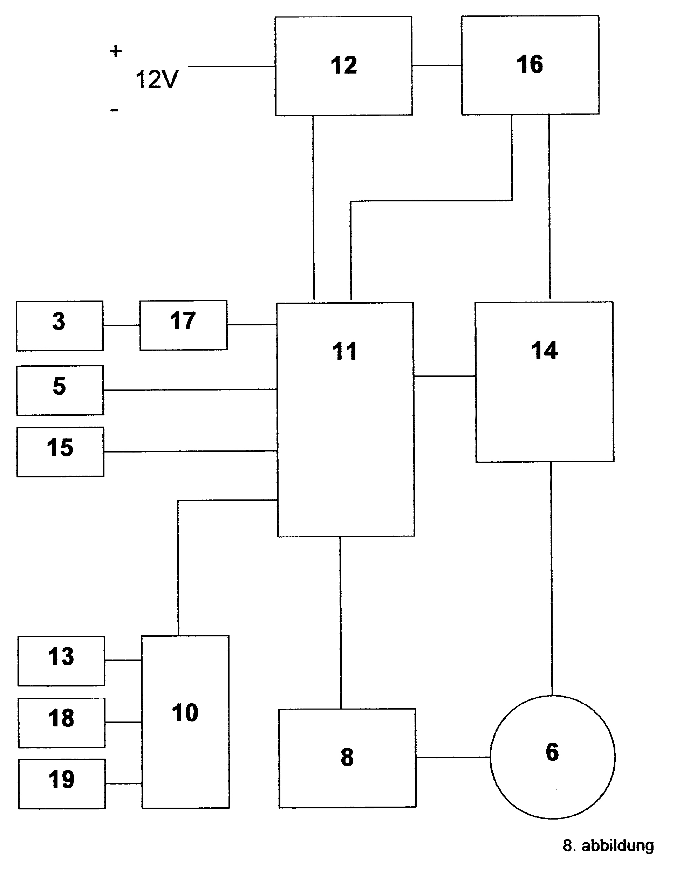

Abbildung 8. elektrische Blockskizze.

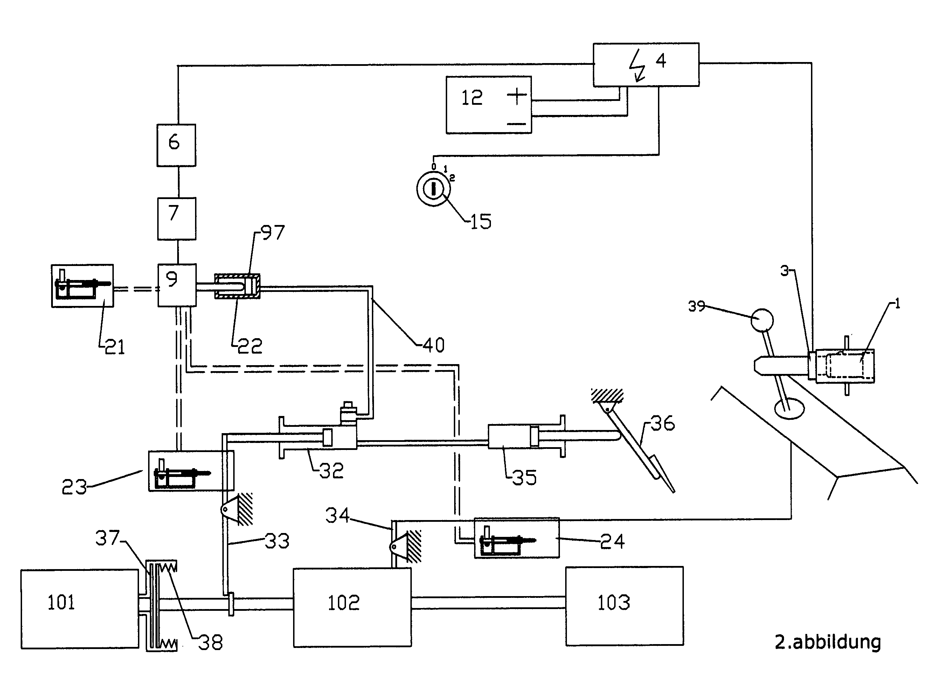

Den Betrieb der Erfindung durch eine der erwähnten Varianten kann man auf den Abbildungen 2. und 3. verfolgen:

Durch die Bedienung des 36 Pedals des 35 Hauptkupplungszylinders fließt das Hydrauliköl durch die 40 Rohrableitung in den 32 Kupplungszylinder. Da die Kraft, die durch die Bedienung des 35 Hauptkupplungszylinders entsteht größer ist, als die Kraft, die durch die 38 Feder, die die 37 Kupplungsscheiben zusammenpressen, erzeugt wird, entfernen sich die 37 Kupplungsscheiben voneinander, was zur Folge hat, dass die Verbindung zwischen dem 101 Motor des Fahrzeuges und den 103 betriebenen Rädern unterbrochen wird. Wenn das 36 Pedal des 35 Hauptkupplungszylinders nicht mehr bedient wird, presst der 32 Kupplungszylinder - auf die Wirkung der vorgespannten 38 Pressfeder der 37 Kupplungsscheiben hin - das Hydrauliköl in den 35 Hauptkupplungszylinder zurück, wodurch auch das 36 Pedal seine Ausgangsposition wieder annimmt.

Für die Neutralisierung der Kupplung wurde in den Hydraulikkreis des 32 Zylinders ein 22 Druckentlastungsbehälter eingebaut, wodurch die Funktion des Systems wie folgt aussieht: Nachdem der 101 Motor gestoppt wurde, wird mit dem 39 Gangschalthebel der 102 Gangschalter in Rückwärtsposition geschaltet, und anschließend der 39 Gangschalthebel mit dem 1 Gangschalthebelschloss verriegelt. Der 3 Induktivsensor leitet das Signal über die Verriegelung durch den 17 Sabotagenschutz an die 4 Steuerungselektronik weiter. Nach der Auswertung des Signals leitet die 4 Steuerungselektronik durch die 14 Leistungsstaffelung Spannung in den 6 Elektromotor, der die 91 Exzenterscheibe durch die 73 Übertragungswelle um 180 Grad verdreht, was der 83 Hallgenerator registriert und mittels der 4 Steuerungselektronik an den 6 Elektromotor geleitete Spannung abschaltet. Mit dem Betrieb des 6 Elektromotors wird die Bewegung des 97 Kolbens des 22 Druckentlastungsbehälters freigestellt. Nach der Eindrückung des 35 Hauptkupplungszylinders wird das Hydrauliköl durch die 40 Hydraulikleitung in den 22 Druckentlastungsbehälter geleitet, dadurch kann beim 32 Kupplungszylinder nicht der Öldruck entstehen, der für die Betätigung des 33 Kupplungshebels nötig wäre. Es entsteht lediglich so viel Druck, was aus der Reibung des 97 Kolbens des 22 Druckentlastungsbehälters und aus der Tätigkeit der 96 Rückstellfeder hinter dem 97 Kolben resultiert. Die 96 Rückstellfeder verhindert, dass durch die erneute Bedienung des Kupplungspedals - mit Hilfe des 35 Hauptkupplungszylinders - im 22 Druckentlastungsbehälter der Druck erzeugt werden kann, der für die Trennung der 37 Kupplungsscheiben nötig ist, da falls das 36 Pedal mit Gewalt zurückgezogen wird, pumpt die 96 Rückstellfeder das Hydrauliköl in den 35 Hauptkupplungszylinder zurück.

Da die Kraft der 38 Feder - die die 37 Kupplungsscheiben zusammenpresst - die mehrfache der Kraft der 96 Rückstellfeder ausmacht, wird das Hydrauliköl so lange den 97 Kolben des 22 Druckentlastungsbehälters bewegen, bis dieser Zustand besteht. Das heißt, dass in diesem Zustand nach der Bedienung des 36 Kupplungspedals - da die Trennung der 37 Kupplungsscheiben nicht erfolgt -, durch den im Rückwärtsgang verriegelten 102 Gangschalter und weil der 101 Motor nicht läuft und durch die Verbindung der 103 betriebenen Räder ist das Fahrzeug nicht mehr zu bewegen.

Die 4 Steuerungselektronik unterbricht - nach der Verriegelung des 39 Gangschalthebels - durch die 10 Zündungsverriegelung (die durch elektrische Relais unterbrochene Kontakte sind) die Steuerungsschaltkreise des 18 Starters und der 19 Treibstoffpumpe. Falls das Fahrzeug über elektrisch betriebenen Gangschalter und elektrisch betriebene Kupplung verfügt, wird die Unterbrechung deren Steuerungsschaltkreise ebenfalls - zusammen mit den Vorigen - von der 10 Zündungsverriegelung vorgenommen.

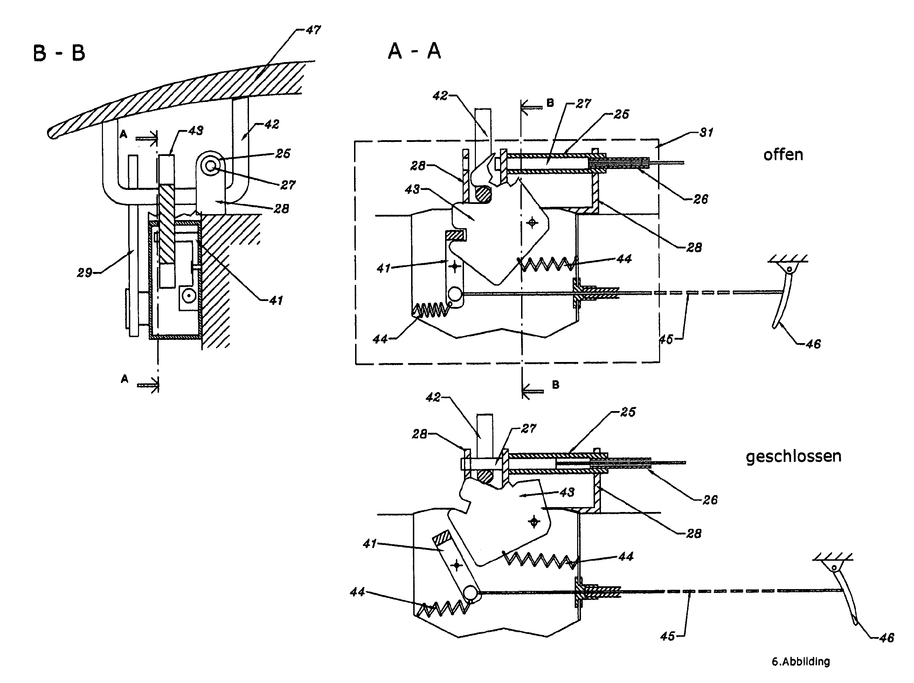

Gleichzeitig mit der Neutralisierung der Kupplung verriegelt der 6 Elektromotor durch das 7 Triebwerk die 47 Motorhaube, wie es in der Beschreibung auf Abbildung 6. zu sehen ist.

Dieser Zustand bleibt so lange aufrecht erhalten, bis das 1 Gangschalthebelschloss ausgeschaltet wird, worüber der 3 Induktivsensor ein neues Signal an die 4 Steuerungselektronik schickt.

Bei einer anderen Ausführungsvariante der Erfindung, falls der 33 Kupplungshebel nicht hydraulisch betrieben wird oder wenn man im Passagierraum kein 1 Gangschalthebelschloss einmontiert haben möchte, wird beim mechanischen 33 Kupplungshebel und beim 34 Gangschalthebel ein Riegel, wie bei der 31 Motorraumverriegelung - eine 21 Verriegelung mit einem 26 Bowden -, angewendet (Abbildung 6.). In diesem Fall steuert der 3 Induktivsensor durch die geschlossene oder offene Stellung des 2 Sicherheitsschlosses mit Schlüssel - der im Passagierraum angebracht ist - mittels der 17 Sabotagenschutzeinheit den 11 Mikroprozessor der 4 Steuerungselektronik.

Auf Abbildung 2., 3. und 4. ist zu sehen, wie das mit 6 Elektromotor betriebene Treibwerk funktioniert. Nachdem die Verriegelung des 39 Gangschalthebels mit dem 1 Gangschalterschloss ausgelöst worden ist, gibt die 4 Steuerungselektronik dem 6 Gleichstromelektromotor auf das Signal des 3 Induktivsensors auf der 14 Leistungsverstärkerstufe einen Öffnungsbefehl. Dann fängt der 6 Elektromotor auf die Wirkung der Rotation des 6 Elektromotors an, das 71 Kranzkammrad des 7 Treibwerks durch das 72 Schneckenrad seiner Welle zu drehen. Es fängt an, sich um ihre im 74 Getriebegehäuse installierte 73 Übertragungswelle zu drehen. Das 71 Kranzkammrad des 7 Treibwerkes ist so anmontiert, dass die 73 Übertragungswelle, die einen viereckigen Wellenstummel hat, in dessen Mitte angebunden ist. An die 73 Übertragungswelle schließt die 81 Positionssensorscheibe eng an, auf deren Außenmantel sich ein ständiger 82 Magnet befindet, der auf Grund der Signale der 83 Hallgeneratoren der 4 Steuerungselektronik ein direktes Rückmeldesignal über die Bewegung des 6 Elektromotors schickt. An dieselbe 73 Übertragungswelle ist die 91 Exzenterscheibe angebunden, deren 92 Exzenterzapfen an die in dem 9 linearen Bewegungsumwandler herausgebildete Nut angeschlossen ist. Die im 9 linearen Bewegungsumwandler herausgebildete Nut steht mit der 93 Auslegerwelle in 90° Winkel, die an den 9 linearen Bewegungsumwandler angeschweißt ist, und die Bewegung derer vom 22 Druckentlastungsbehälter, vom 97 Kolben und vom 94 Wellenhalter bestimmt wird. An den Deckel des 9 linearen Bewegungsumwandlers ist ein 26 beziehungsweise 20, 30 Bowdenzüge aufnehmender 95 Bowdenkopfrast angeschlossen, der auch den 27 Riegel der 31 Motorraumverriegelung betreibt, was in diesem Fall so erfolgt, dass der 27 Riegel mit Hilfe des 26 Riegelbowdens in das 25 Riegelgehäuse eingezogen wird wie es auf Abbildung 6. zu sehen ist. Durch die Bewegung des 9 linearen Bewegungsumwandlers wird auch die 93 Auslegerwelle geöffnet, dann schiebt die letztere den 97 Kolben des 22 Druckentlastungsbehälters nach vorne bis zu dem Auge des 98 Entlüftungsventils. Da der 92 Excenterzapfen die 93 Auslegerwelle aus dieser geöffneten Position nicht bewegen lässt, kann das Hydrauliköl nur in Richtung des 32 Kupplungszylinders fließen, nachdem das Kupplungspedal abgedrückt worden ist, wodurch es die 37 Kupplungsscheiben gegen die 38 Feder, die die 37 Kupplungsscheibe zusammenpressen, voneinander entfernt. In dieser Position ist das Fahrzeug zu bewegen, beziehungsweise es kann der geeignete Gang mit Hilfe des 39 Gangschalthebels ausgewählt werden.

Wenn das Fahrzeug steht und der 39 Gangschalthebel nach der Motorabstellung in Rückwärtsgang geschaltet wird, schickt der 3 Induktivsensor dem 6 Elektromotor auf die Wirkung der Einschaltung des 1 Gangschalterschlosses durch 4 die Steuerungselektronik die Anweisung, sich zu schließen. Dann bewegt der 92 Exzenterzapfen den 9 linearen Bewegungsumwandler auf eine solche Weise, dass dadurch die 93 Auslegerwelle den Weg für den 97 Kolben des 22 Druckentlasters frei macht, und der 27 Riegel mit Hilfe des 95 Bowdenkopfrastes und des 26 Riegelbowdens aus dem Riegelgehäuse über die 42 Schlossschelle des 47 Motorgehäuses auf dem 28 Riegelstängel in einem solchen Maße geschoben wird, dass dadurch die Öffnung des 47 Motorgehäuses verhindert wird.

In dieser Position kann das Fahrzeug von seinem Platz nicht wegbewegt werden, denn das Hydrauliköl bewegt den 97 Kolben des 22 Druckentlastungsbehälters, der viel weniger Widerstand hat, nachdem man das 36 Kupplungspedal abgedrückt hat, dadurch werden die 37 Kupplungsscheiben voneinander nicht getrennt. Wenn der 39 Gangschalthebel mit dem 1 Gangschaltschloss abgesperrt ist, kann man aus dem Rückwärtsgang nicht in Gang 1 schalten, und der 27 Schließriegel des 21 Riegels des Motorraumes lässt die Öffnung der 47 Motorhaube nicht zu.

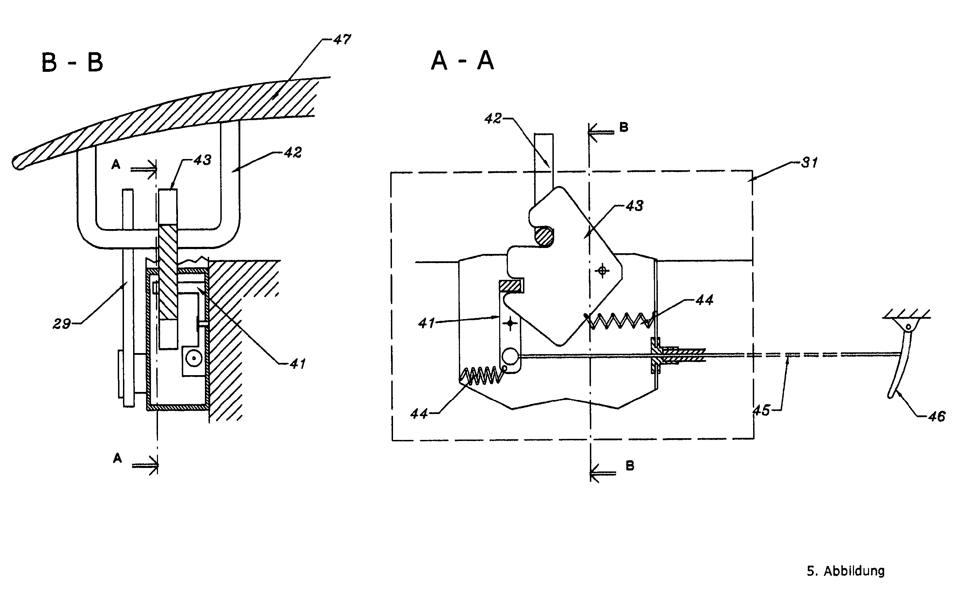

Das Verriegelungssystem als Lösung für die Verriegelung des 31 Motorraumschlosses wird auf Abbildung 5. und 6. dargestellt:

Auf die 47 Motorhaube des Motorraums der Fahrzeuge werden eine oder zwei Schlossschellen montiert, meistens werden sie geschweißt. An der 48 Stirnwand des Fahrzeuges ist das 31 Motorraumschloss entsprechend der 42 Schlossschelle zu finden, das einen 43 Schlossstängel und eine 44 Schlossstängelfeder enthält. Im Gegensatz zur Wirkung der 44 Schlossstängelfeder befindet sich der in den Passagierraum montierte 46 Öffnerbowden, der zu dem 45 Hebel geleitet wurde, der den Motorraum öffnet. In der Ausgangsposition wird die Waagrechte der 42 Schlossschelle von dem 43 Schlossstängel umgeben, das heißt, es hält die 47 Motorhaube blockiert, was durch die 44 Schlossstängelfeder gesichert wird.

Ein Gegenstand dieser Erfindung, der 21 Riegel, der den Motorraum öffnet, verhindert, dass Unbefugte die 47 Motorhaube öffnen.

Der Kernpunkt der Erfindung ist bei diesem Punkt, dass der 26 Riegelbowden des 21 Riegels, der den Motorraum öffnet, an den 9 linearen Bewegungsumwandler des durch den 6 Elektromotor betriebenen 7 Treibwerkes angebunden ist, und dieser Bowden an die Stange des 27 Riegels des 25 Riegelgehäuses angeschlossen ist, die sich nach der Bewegung des durch den 6 Motor betriebenen 7 Treibwerkes in die im 28 Riegelhalterstengel errichtete Nut zwischen der 42 Schlossschelle und der 47 Motorhaube in Richtung Schließung schieben lässt. In dieser Position ist es unwirksam, den 46 Hebel, der den Motorraum öffnet, zu ziehen, um die 47 Motorhaube zu öffnen.

Nach der Ausschaltung des 1 Gangschaltschlosses geschieht der vorher beschriebene Prozess, aber umgekehrt: das mit 6 Elektromotor betriebene 7 Treibwerk zieht den 27 Riegel in das Riegelgehäuse mit Hilfe des 26 Riegelbowdens zurück. Bei diesem Punkt ist die 47 Motorhaube zu öffnen.

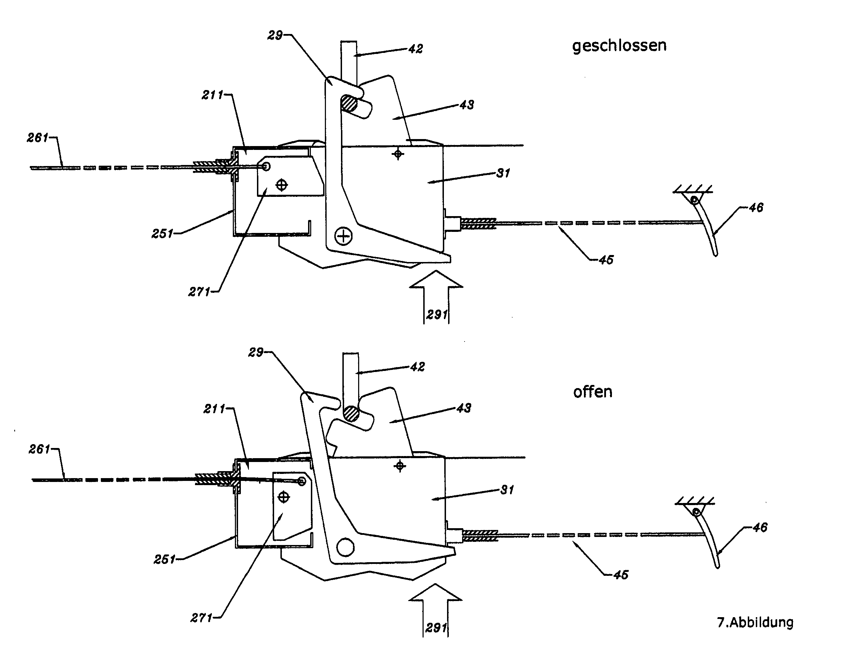

Eine andere mögliche Variante, durch die verhindert werden kann, dass die 47 Motorhaube geöffnet wird, wird auf Abbildung 7. veranschaulicht.

Damit sich die 47 Motorhaube während der Fahrt nicht öffnen kann, wird ein 29 Sicherheitshaken eingebaut, die mit dem 291 manuellen Öffner ausgehakt werden kann, nachdem das 31 Motorraumschloss mit dem 46 Öffnerhebel geöffnet worden ist.

Der Kernpunkt dieser Erfindung bei dieser Variante ist es, dass das 251 Riegelgehäuse am 31 Motorraumschloss befestigt ist, dessen 271 Riegel mit Hilfe des 261 an den 9 linearen Umwandler des 7 Treibwerkes angebundenen Riegelbowdens bei dem blockierten Stand des linearen Umwandlers in Richtung 29 Sicherheitshaken den 271 Riegel so dreht, dass es in diesem Zustand unmöglich ist, sie mit dem manuellen Öffner aufzumachen, wodurch die 47 Motorhaube in diesem Zustand nicht geöffnet werden kann.

Liste der Zeichen auf den Abbildungen des Gangschalthebels, des Motorraumöffners, des Kupplungshebelriegels und des hydraulischen Kupplungsneutralisierermechanismusses.
A Passagierraum
B Motorraum

1. Gangschaltschloss
2. Sicherheitsschloss mit Schlüssel
3. Induktivsensor
4. Steuerungselektronik
5. Tastatur, entweder mit Fernbedienung oder Diebstahlblockierer - alternative Betätigungsmöglichkeiten
6. Elektromotor
7. Treibwerk
8. Positionssensor
9. linearer Bewegungsumwandler
10. Zündungsblockierung - mit Unterbrechungsrelais an 2 oder 3 Punkten
11. Steuerungsprozessor
12. Speisespannung - Batterie
13. mit Elektromotor betriebener Gangschalter
14. Leistungsstufe
15. Zündungsschalter
16. Sicherheitsstromkreis
17. Schutz gegen Sabotage
18. Steuerungsstromkreis des Selbststarters
19. Steuerungsstromkreis der Treibstoffpumpe
20. Riegelbowden - Kupplungshebelriegel
21. Riegel, der den Motorraum öffnet
211. Riegel, der den Motorraum öffnet
22. Druckentlastungsbehälter
23. Kupplungshebelriegel
24. Gangschalthebelriegel
25. Riegelgehäuse
251. Riegelgehäuse
26. Riegelbowdenzug - der den Motorraum öffnet
261 Riegelbowdenzug - der den Motorraum öffnet
27. Riegel
271. Riegel
28. Riegelhalter
29. Sicherheitsnut
291. manueller Öffner
30. Riegelbowden - Gangschalthebelriegel
31. Motorraumschloss
32. Kupplungszylinder
33. Kupplungshebel
34. Gangschalthebel
35. Hauptkupplungszylinder
36. Kupplungspedal
37. Kupplungsscheibe
38. Feder zum Zusammenpressen
39. Gangschalthebel
40. Rohrableitung der Hydraulik
41. Schlossstengelbefestiger
42. Schlossschelle
43. Schlossstängel
44. Schlossstängelfeder
45. Bowdenzug zum Öffnen
46. Hebel zum Öffnen
47. Motorhaube
48. Stirnwand
71. Kranzkammrad
72. Motorschneckenrad
73. Übertragungswelle
74. Getriebegehäuse
81. Positionssensorscheibe
82. Magnet
83. Hallgenerator
90. Nut / für Exzenterzapfen/
91. Exzenterscheibe
92. Exzenterzapfen
93. Auslegerwelle
94. Wellenhalter
95. Bowdenkopfrast
96. Rückstellfeder
97. Kolben
98. Entlüfter
99. Rohranschluss der Hydraulik
101. Motor des Fahrzeuges
102. Gangschalter
103. betriebene Räder

## Patentansprüche

1. Elektronisch betriebener, hydraulischer Kupplungsneutralisierer- und Verriegelungsmechanismus charakterisiert **dadurch**, dass der Kupplungszylinder (32) und der Hauptkupplungszylinder (33) des Fahrzeuges durch eine hydraulische Rohrableitung an das Druckentlastungsbehälter (22) angebunden ist.

2. Kupplungsneutralisierer- und Verriegelungsmechanismus nach Patentanspruch 1. charakterisiert **dadurch**, dass das mit Elektromotor (6) betriebene Treibwerk (7) durch einen direkten Ausgang an den Kolben des Druckentlastungsbehälters (22) angebunden ist.

3. Kupplungsneutralisierer- und Verriegelungsmechanismus nach Patentanspruch 1. charakterisiert **dadurch**, dass der Motorraumöffnerriegel (21, 211), der Riegel des Kupplungshebels (23) und der Gangschalthebelriegel (24) an den Bowdenkopfbefestiger (95) des linearen Umwandlers (9) des Treibwerkes (7) angebunden sind.

4. Kupplungsneutralisierer- und Verriegelungsmechanismus nach Patentanspruch 1. charakterisiert **dadurch**, dass die Steuerungselektronik (4) den Elektromotor (6) auf Grund der Signale steuert, die vom Induktivsensor (3) über die Position des Schlosses (1;2), das das System betreibt, abgegeben werden.

5. Kupplungsneutralisierer- und Verriegelungsmechanismus nach Patentanspruch 1. charakterisiert **dadurch**, dass das Treibwerk (7) mit Elektromotor (6) zusammen mit der Steuerungselektronik (4), dem Druckentlastungsbehälter (22) und den Verriegelungssystemen (21; 211; 23; 24) im Motorraum des Fahrzeuges eingebaut sind und die Steuerungselektronik (4) ist so anmontiert, dass sie eine Drei-Punkt-Zündungsblockierung hat.

6. Kupplungsneutralisierer- und Verriegelungsmechanismus nach Patentanspruch 1. charakterisiert **dadurch**, dass die Steuerungselektronik (4) im Fall eines Angriffs gegen den Induktivsensor (3) dem Elektromotor (6) ein Blockierungsbefehl schickt.

7. Kupplungsneutralisierer- und Verriegelungsmechanismus nach Patentanspruch 1. charakterisiert **dadurch**, dass der Druckentlastungsbehälter (22) durch eine hydraulische Leitung (40) an den Kupplungszylinder (32) des Fahrzeuges angebunden ist.

8. Kupplungsneutralisierer- und Verriegelungsmechanismus nach Patentanspruch 1. charakterisiert **dadurch**, dass bei dem Kolben des Druckentlastungsbehälters (22) eine Rückstellfeder (96) anmontiert wird.

9. Kupplungsneutralisierer- und Verriegelungsmechanismus nach Patentanspruch 1. charakterisiert **dadurch**, dass der Riegel (271) durch seinen Ausbau bei geschlossener Position des linearen Bewegungsumwandlers (9) verhindert, dass der Sicherheitshaken (29) bewegt wird.

10. Kupplungsneutralisierer- und Verriegelungsmechanismus nach Patentanspruch 1. charakterisiert **dadurch**, dass der Riegel (271) durch seine Ausbau bei geschlossener Position des linearen Bewegungsumwandlers (9) verhindert, dass die Motorhaube (47) geöffnet wird, indem er durch die Schlossschelle (42) durchgeleitet wird.
